# EUROPÄISCHE PATENTSCHRIFT

(11) **EP 3 504 518 B1**
(45) Veröffentlichungstag und Bekanntmachung des Hinweises auf die Patenterteilung: **09.06.2021**
(21) Anmeldenummer: 17730790.7
(22) Anmeldetag: 19.06.2017
(51) Int. Cl.: B65B 3/00, B65B 3/32, F04B 13/00, F04B 23/02, F04B 53/10, F04B 53/14, G01F 11/02

(54) **FÜLLVORRICHTUNG MIT VERBESSERTER KOLBENPUMPE**
FILLING DEVICE WITH IMPROVED PISTON PUMP
DISPOSITIF DE REMPLISSAGE COMPRENANT UNE POMPE À PISTON AMÉLIORÉE

(30) Priorität: 24.08.2016 DE 102016215875
(43) Veröffentlichungstag der Anmeldung: 03.07.2019
(73) Patentinhaber: Syntegon Technology GmbH, 71332 Waiblingen (DE)
(72) Erfinder: BAEUERLE, Johannes, 74423 Obersontheim (DE); KAUDER, Florian, 91611 Lehrberg (DE)
(74) Vertreter: DREISS Patentanwälte PartG mbB
(86) Internationale Anmeldenummer: PCT/EP2017/064862
(87) Internationale Veröffentlichungsnummer: WO 2018/036683

(56) Entgegenhaltungen:
- EP-A1- 0 234 607
- WO-A2-2004/032994
- CH-A- 441 625
- DE-A1- 2 520 849
- DE-A1- 19 536 258
- US-A- 5 127 547

## Beschreibung

### Stand der Technik

Die vorliegende Erfindung betrifft eine Füllvorrichtung zum Abfüllen einer definierten Menge eines Produkts, insbesondere eines pharmazeutischen Produkts, mit einer Kolbenpumpe.

In der Pharmaindustrie müssen verschiedene, insbesondere flüssige Wirkstoffe, in definierten Mengen mit sehr engen Toleranzen in Behältnisse, wie z.B. Flaschen oder Vials oder ähnliches, abgefüllt werden. Hierbei sind Füllsysteme bekannt, welche einen Edelstahlbehälter aufweisen, in welchem das abzufüllende Produkt eingefüllt wird und über Leitungen zu einem Verteilerrohr oder dgl. führt, an welchem eine oder mehrere Abfülleinrichtungen in Form von Schläuchen, an deren Ende jeweils eine Füllnadel angeordnet ist, vorgesehen sind. Auch ist hierbei eine Drossel angeordnet, durch welche der abzufüllende Wirkstoff hindurchgeführt wird. Die Drosseln müssen dabei je nach Anwendung ausgewählt werden und sind Bauteile mit engsten Toleranzen, um eine hohe Genauigkeit bei der Abfüllung sicherzustellen. Von daher sind derartige Drosseln sehr teuer. Da in der pharmazeutischen Industrie häufig wechselnde Produkte abgefüllt werden, müssen Kreuzkontaminationen verhindert werden. Dies erfordert einen hohen Reinigungsaufwand und insbesondere bei Sterilprodukten einen sehr großen Aufwand. Von daher werden auch verstärkt Einwegprodukte verwendet. Eine derartige Füllvorrichtung mit einer als Einwegartikel ausgebildeten Baugruppe zur Abfüllung ist aus der DE 102008001204 A1 bekannt. Hierbei hängt jedoch die Genauigkeit der Abfüllung von der Ansteuerung eines Absperrventils ab. Grundsätzlich könnte das Absperrventil beispielsweise durch eine wie aus der DE 102012022836 B3 bekannte Schlauchpumpe ersetzt werden. Allerdings ist diese bekannte Schlauchpumpe sehr aufwendig und teuer und insbesondere nicht für Einweganwendungen geeignet.

Ferner ist aus der DE 195 36 258 A1 eine Füllvorrichtung mit den Merkmalen des Oberbegriffs des Anspruchs 1 bekannt. Weiterhin zeigt die WO 2004/032994 A2 eine Füllvorrichtung mit einer Formgedächtnislegierung.

### Offenbarung der Erfindung

Die erfindungsgemäße Füllvorrichtung zum Abfüllen einer definierten Menge eines Produkts mit den Merkmalen des Anspruchs 1 weist demgegenüber den Vorteil auf, dass eine sehr kostengünstige Kolbenpumpe bereitgestellt werden kann. Weiterhin ist erfindungsgemäß eine exakte Abfüllung von vorbestimmten Mengen des Produkts möglich, so dass die Füllvorrichtung insbesondere bei der Abfüllung von medizinischen Produkten, insbesondere flüssigen oder pastösen Produkten, verwendbar ist. Durch die Verwendung der Kolbenpumpe kann dabei auch eine hohe Ausbringung der Füllvorrichtung sichergestellt werden. Die Verwendung der Kolbenpumpe stellt ferner sicher, dass die Füllvorrichtung unabhängig ist von einem Zustand einer sonst im Stand der Technik vorhandenen Produktvorlage, da die Kolbenpumpe einen eigenen Ansaugtakt bereitstellt. Weiterhin kann eine genauere Dosierbarkeit ermöglicht werden, da eine Dosierung durch nur einen einzigen Einmalhub realisiert werden kann. Dies wird erfindungsgemäß dadurch erreicht, dass die Füllvorrichtung einen Speicher zum Speichern des abzufüllenden Produkts und eine Füllnadel zum Abgeben des Produkts umfasst. Ferner ist eine Verbindungsleitung zwischen dem Speicher und der Füllnadel vorgesehen, wobei eine Kolbenpumpe in der Verbindungsleitung angeordnet ist, um das abzufüllende Produkt vom Speicher zur Dosiereinrichtung zu fördern. Die Kolbenpumpe umfasst einen Zylinderkörper, einen Kolben, einen Zylinderdeckel, einen Zulauf, einen Ablauf und ein erstes und zweites Rückschlagventil. Die Kolbenpumpe, die Füllnadel und die Verbindungsleitung bilden dabei eine Baugruppe, welche als Einwegartikel ausgebildet ist. Dadurch kann die Baugruppe nach Gebrauch einfach entsorgt werden. Um die Kosten der Füllvorrichtung gering zu halten, sind der Zylinderkörper, der Kolben, der Zylinderdeckel, der Zulauf, der Ablauf und das erste und zweite Rückschlagventil aus einem nichtmetallischen Werkstoff hergestellt. Dadurch kann insbesondere verhindert werden, dass Kreuzkontaminationen bei der Abfüllung verschiedener pharmazeutischer Produkte nacheinander vermieden werden kann, da bei Reinigungsprozessen, welche bei mehrfach verwendbaren Anlagen durchgeführt werden müssen, nie sichergestellt werden kann, dass eine absolute Reinheit auch nach Reinigung vorhanden ist. Somit ist die Erfindung insbesondere für toxische Anwendungen geeignet. Weiterhin müssen die Bauteile der Füllvorrichtung nicht vorbereitet werden und insbesondere entfällt auch ein Montageaufwand, so dass minimale Prozesskosten entstehen. Auch entstehen keine Kosten für die Reinigung oder dgl.

Die Unteransprüche zeigen bevorzugte Weiterbildungen der Erfindung.

Vorzugsweise sind die Bauteile der Kolbenpumpe alle aus dem gleichen Material. Insbesondere sind die Bauteile der Kolbenpumpe aus PEEK oder aus UHMW-Polyethylen (Ultra High Molekular Wight-Polyethylen).

Vorzugsweise sind der Zulauf und der Ablauf am Zylinderdeckel angeordnet. Insbesondere bevorzugt sind der Zulauf und der Ablauf an einem stirnseitigen Ende des Zylinderdeckels angeordnet. Der Zulauf und der Ablauf sind vorzugsweise als Zulaufstutzen und als Ablaufstutzen am Zylinderdeckel und besonders bevorzugt einteilig mit dem Zylinderdeckel ausgebildet.

Für einen besonders kompakten Aufbau ist das erste Rückschlagventil vorzugsweise im Zulauf und das zweite Rückschlagventil vorzugsweise im Ablauf angeordnet.

Um eine besonders exakte Dosierung der Füllvorrichtung zu ermöglichen, ist am Zylinder der Kolbenpumpe an einem vom Zylinderdeckel abgewandten Ende ein separates Führungselement angeordnet. Das separate Führungselement ist besonders bevorzugt mittels einer Clips-Verbindung im Zylinderkörper fixiert. Dadurch kann eine sehr einfache Montage des Führungselements sichergestellt werden.

Für einen weiter vereinfachten und kostengünstigen Aufbau sind vorzugsweise das erste und zweite Rückschlagventil jeweils als Schirmventil ausgebildet. Das Schirmventil umfasst vorzugsweise einen tellerartigen Abdichtbereich, welcher in Abhängigkeit einer Einbaurichtung in einen Leitungsabschnitt den Leitungsabschnitt verschließt oder freigibt. Das Schirmventil dichtet vorzugsweise am äußeren Rand des Schirms ab.

Weiter bevorzugt ist am Kolben der Kolbenpumpe eine umlaufende Dichtlippe vorgesehen. Die Dichtlippe ist besonders bevorzugt in den Kolben integriert. Für eine besonders kostengünstige Ausgestaltung sind die Dichtlippe und der Kolben aus dem gleichen Material, insbesondere PEEK oder UHMW-Polyethylen, hergestellt. Die Dichtlippe wird dabei besonders bevorzugt mittels Kaltumformung erzeugt.

Die erfindungsgemäße Füllvorrichtung wird besonders bevorzugt zur Abfüllung von pharmazeutischen Produkten, insbesondere Flüssigkeiten oder pastöse Produkte, verwendet.

### Zeichnung

Nachfolgend wird ein bevorzugtes Ausführungsbeispiel der Erfindung unter Bezugnahme auf die begleitende Zeichnung im Detail beschrieben. In der Zeichnung ist:
- Figur 1: eine schematische Ansicht einer Füllvorrichtung gemäß einem bevorzugten Ausführungsbeispiel der Erfindung,
- Figur 2: eine schematische Schnittansicht einer Kolbenpumpe von Figur 1,
- Figur 3: eine schematische Seitenansicht des Kolbens von Figur 2, und
- Figur 4: eine schematische Schnittansicht eines ersten und zweiten Rückschlagventils in einem Zylinderdeckel der Kolbenpumpe von Figur 1.

### Bevorzugte Ausführungsform der Erfindung

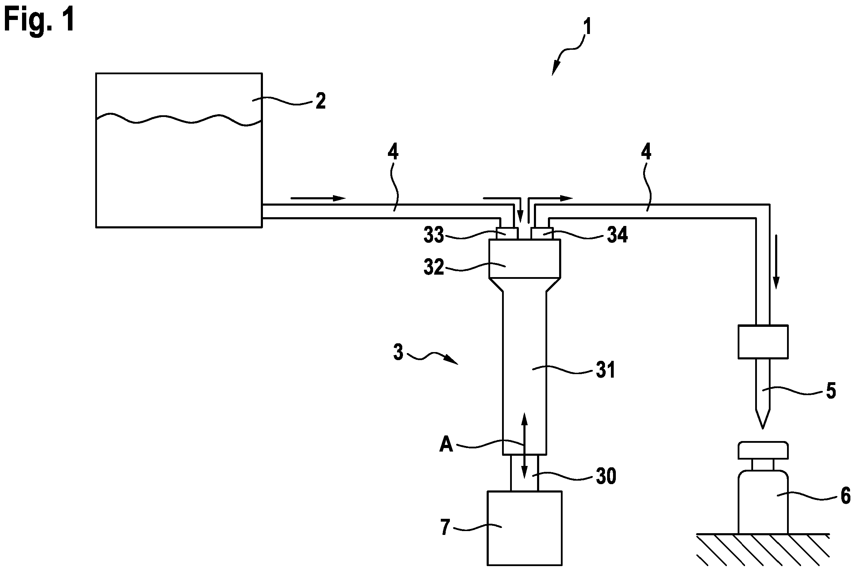

Nachfolgend wird unter Bezugnahme auf die Figuren 1 bis 4 eine Füllvorrichtung 1 gemäß einem ersten bevorzugten Ausführungsbeispiel der Erfindung im Detail beschrieben.

Wie aus Figur 1 ersichtlich ist, umfasst die Füllvorrichtung 1 einen Speicher 2, in welchem ein abzufüllendes Produkt gespeichert ist. Das abzufüllende Produkt ist vorzugsweise ein pharmazeutisches Produkt, beispielsweise ein Medikament. Der Speicher 2 ist über eine Verbindungsleitung 4 mit einer Füllnadel 5 verbunden, welche als Dosiereinrichtung das abzufüllende Produkt in Behältnisse 6, beispielsweise Vials oder dgl., abfüllt.

In der Verbindungsleitung 4 ist eine Kolbenpumpe 3 angeordnet, welche einen hin- und hergehenden Kolben 30 umfasst. Dies ist in Figur 1 durch den Doppelpfeil A angedeutet. Der Kolben 30 ist in einem Zylinderkörper 31 hin- und hergehend angeordnet.

Die Kolbenpumpe 3 wird mittels eines Antriebs 7 angetrieben.

Der Zylinderkörper 31 ist mit einem Zylinderdeckel 32 verschlossen. Wie aus Figur 1 ersichtlich ist, sind am Zylinderdeckel 32 ein Zulauf 33 und ein Ablauf 34 angeordnet. Der Zulauf 33 und der Ablauf 34 sind jeweils als Stutzen einstückig mit dem Zylinderdeckel 32 gebildet.

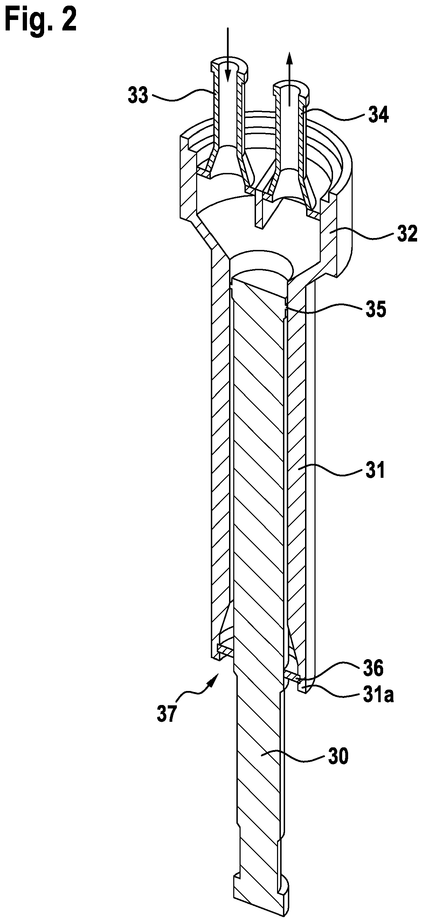

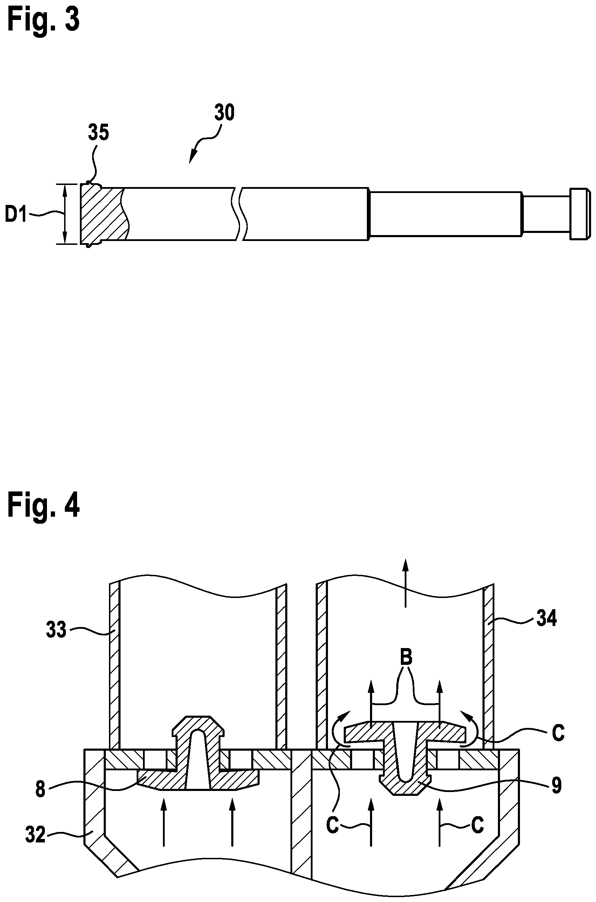

Wie insbesondere aus den Figuren 2 und 4 ersichtlich ist, sind im Zylinderdeckel 32 ferner ein erstes Rückschlagventil 8 und ein zweites Rückschlagventil 9 angeordnet. Die beiden Rückschlagventile 8, 9 sind identisch ausgebildet, wobei die Einbaurichtung, wie aus Figur 4 ersichtlich ist, im Zulauf 33 und im Ablauf 34 umgekehrt ist. Dadurch wird erreicht, dass ein Ansaugvorgang und ein Fördervorgang in Abhängigkeit von einer Bewegungsrichtung des Kolbens 30 ermöglicht wird. Figur 4 zeigt dabei den Fördervorgang, in welchem das erste Rückschlagventil 8 geschlossen ist und das zweite Rückschlagventil 9 geöffnet ist. Dies ist in Figur 4 durch die Pfeile B angedeutet, wodurch sich dann eine Förderung entsprechend der Pfeile C in den Ablauf 34 ergibt.

Figur 3 zeigt im Detail den Kolben 30 der Kolbenpumpe 3. Am Kolben 30 ist integral eine Dichtung 35 ausgebildet, welche aus dem gleichen Material wie das Material des Kolbens 30 hergestellt ist. Bevorzugt wird als Material UHMW-Polyethylen, verwendet. Die umlaufende Dichtung 35 stellt dabei sicher, dass während des Ansaughubes, d.h., wenn der Kolben 30 in Richtung fort vom Zylinderdeckel 32 bewegt wird und bei einer Druckbewegung, in welcher der Kolben 30 in Richtung zum Zylinderdeckel 32 bewegt wird, eine Dichtheit zum Zylinderkörper 31 bereitgestellt wird. Durch die Integration der Dichtung 35 in den Kolben 30 kann ein besonders kostengünstiger Aufbau erreicht werden. Die Dichtung 35 ist an einem vergrößerten Durchmesser D1 des Kolbens angeordnet.

Da die Verbindungsleitungen 4, die Kolbenpumpe 3 und die Füllnadel 5 als Baugruppe vorgesehen sind, welche als Einwegartikel ausgebildet ist, ist die Dichtung 35 ausreichend dimensioniert, um eine Abdichtung der Kolbenpumpe für den Abfüllvorgang des im Speicher 2 gespeicherten Produkts sicherzustellen. Da nach Gebrauch die Baugruppe mit Verbindungsleitung 4, Kolbenpumpe 3 und Füllnadel 5 entsorgt wird, muss keine langlebige Dichtheit sichergestellt werden. Die Dichtheit muss lediglich für den Abfüllvorgang sichergestellt werden.

Damit der Kolben 30 sicher im Zylinderkörper 31 geführt ist, ist ferner ein Führungselement 36 vorgesehen (vgl. Figur 2). Das Führungselement 36 führt den Kolben 30 im Zylinderkörper 31. Das Führungselement 36 ist mittels einer Clips-Verbindung 37 im Zylinderkörper angeordnet. Genauer ist die Clips-Verbindung 37 an dem vom Zylinderdeckel 32 entfernten Ende 31a des Zylinderkörpers 31 vorgesehen (vgl. Figur 2).

Somit kann erfindungsgemäße eine Einweg-Füllvorrichtung 1 bereitgestellt werden, bei der eine sehr kostengünstige Kolbenpumpe verwendet werden kann. Hierbei kann die kostengünstige Kolbenpumpe, welche bevorzugt aus PEEK oder UHMW-Polyethylen, hergestellt ist, die gleichen Füllleistungen wie eine üblicherweise verwendete metallische Kolbenpumpe bereitstellen. Durch die Integration der Kolbenpumpe 3 in die Füllvorrichtung 1 kann ferner eine Unabhängigkeit von einem Zustand einer sonst im Stand der Technik vorhandenen Produktvorlage sichergestellt werden. Weiterhin ist die Kolbenpumpe 3 derart eingerichtet, dass eine Befüllung des Behältnisses 6 durch einen Einmalhub ermöglicht wird. Hierdurch kann ein besonders genau dosierter Volumenstrom erreicht werden.

Da die Kolbenpumpe 3, die Verbindungsleitungen 4 und die Füllnadel 5 eine Einmal-Baugruppe bilden, kann keine Kreuzkontamination bei aufeinanderfolgenden Abfüllvorgängen auftreten. Weiterhin kann auch ein schnellerer Produktwechsel auf der Füllvorrichtung erreicht werden. Auch ist keine Reinigung von Bauteilen der Füllvorrichtung notwendig.

Besonders bevorzugt wird die Baugruppe, umfassend die Kolbenpumpe 3, die Verbindungsleitungen 4 und die Füllnadel 5 als vorsterilisiertes System geliefert, so dass die Baugruppe sofort nach Auspacken verwendbar ist.

Die Dichtung 35 weist dabei bevorzugt eine Dichtlippe mit Vorspannung auf. Dadurch kann eine besonders sichere Abdichtung des Kolbens in dem Zylinderkörper 31 erreicht werden.

Durch die Ausbildung des ersten und zweiten Rückschlagventils 8, 9 als Schirmventil muss für die Steuerung der Rückschlagventile kein spezielles mechanisches Steuerelement eingesetzt werden. Die Steuerung der Rückschlagventile erfolgt ausschließlich über den jeweils vorhandenen Druck in der Kolbenpumpe. Ein notwendiger Öffnungs- und Schließdruck für die als Schirmventile ausgebildeten Rückschlagventile kann durch Wahl einer Ventilsitzdicke variiert werden. Hierbei sei angemerkt, dass durch die Wahl einer vorbestimmten Ventil-Vorspannung der Rückschlagventile 8, 9 eine Anpassung an eine Viskosität des abzufüllenden Produkts möglich ist. Somit kann eine Kolbenpumpe realisiert werden, deren Rückschlagventile durch eine Fluiddrucksteuerung angesteuert werden.

Somit kann erfindungsgemäß eine Füllvorrichtung bereitgestellt werden, welche eine als Einwegartikel ausgebildete Baugruppe mit Kolbenpumpe 3, Verbindungsleitungen 4 und Füllnadel 5 bereitstellt. Dabei kann eine Einwegkolbenpumpe verwendet werden, welche besonders kostengünstig herstellbar ist und eine im Vergleich mit Schlauchpumpen besonders hochgenaue Dosierung ermöglicht. Dabei muss auch keine Reinigung von produktberührenden Bauteilen mehr erfolgen, da die produktberührenden Bauteile als Einwegartikel entsorgt werden können. Dadurch entfällt auch die Gefahr von Kreuzkontaminationen bei der Abfüllung von insbesondere pharmazeutischen Produkten.

## Patentansprüche

1. Füllvorrichtung zum Abfüllen einer definierten Menge eines Produkts, umfassend:
- einen Speicher (2) zum Speichern des abzufüllenden Produkts,
- eine Füllnadel (5) zum Abgeben des abzufüllenden Produkts,
- eine Verbindungsleitung (4), um den Speicher (2) mit der Füllnadel (5) zu verbinden, und
- eine Kolbenpumpe (3), welche in der Verbindungsleitung (4) angeordnet ist, um das abzufüllende Produkt vom Speicher (2) zur Füllnadel (5) zu fördern,
- wobei die Kolbenpumpe (3) einen Kolben (30), einen Zylinderkörper (31), einen Zylinderdeckel (32), einen Zulauf (33), einen Ablauf (34), ein erstes Ventil (8) und ein zweites Rückschlagventil (9) umfasst,
- wobei der Kolben (30), der Zylinderkörper (31), der Zylinderdeckel (32), der Zulauf (33), der Ablauf (34), das erste Rückschlagventil (8) und das zweite Rückschlagventil (9) aus einem nichtmetallischen Werkstoff hergestellt sind,
**dadurch gekennzeichnet, dass**
- das erste Ventil (8) ein Rückschlagventil ist, und
- die Kolbenpumpe (3), die Füllnadel (5) und die Verbindungsleitung (4) eine Baugruppe bilden, die als Einwegartikel ausgebildet ist.

2. Füllvorrichtung nach Anspruch 1, wobei der Kolben (30), der Zylinderkörper (31), der Zylinderdeckel (32), der Zulauf (33), der Ablauf (34), das erste Rückschlagventil (8) und das zweite Rückschlagventil (9) aus dem gleichen Werkstoff, insbesondere PEEK oder UHMW-Polyethylen, hergestellt sind.

3. Füllvorrichtung nach einem der vorhergehenden Ansprüche, wobei der Zulauf (33) und der Ablauf (34) im Zylinderdeckel (32) angeordnet sind.

4. Füllvorrichtung nach einem der vorhergehenden Ansprüche, wobei das erste Rückschlagventil (8) im Zulauf (33) und das zweite Rückschlagventil (9) im Ablauf (34) angeordnet sind.

5. Füllvorrichtung nach einem der vorhergehenden Ansprüche, wobei am Zylinderkörper (31) an einem vom Zylinderdeckel (32) abgewandten Ende ein separates Führungselement (36) angeordnet ist.

6. Füllvorrichtung nach Anspruch 5, wobei das Führungselement (36) mittels einer Clips-Verbindung (37) im Zylinderkörper (31) fixiert ist.

7. Füllvorrichtung nach einem der vorhergehenden Ansprüche, wobei das erste Rückschlagventil (8) und das zweite Rückschlagventil (9) jeweils als Schirmventil ausgebildet ist.

8. Füllvorrichtung nach einem der vorhergehenden Ansprüche, wobei am Kolben (30) eine umlaufende Dichtlippe vorgesehen ist, welche integral mit dem Kolben (30) gebildet ist.

9. Füllvorrichtung nach Anspruch 8, wobei die integral am Kolben (30) gebildete Dichtung (35) eine Dichtlippe mit Vorspannung aufweist.

## Claims

1. Filling device for filling a defined quantity of a product, comprising:
- a reservoir (2) for storing the product to be filled,
- a filling needle (5) for administering the product to be filled,
- a connection line (4) for connecting the reservoir (2) to the filling needle (5), and
- a piston pump (3) in the connection line (4) for conveying the product to be filled from the reservoir (2) to the filling needle (5),
- whereby the piston pump (3) includes a piston (30), a cylinder body (31), a cylinder lid (32), an intake (33), an outlet (34), a primary valve (8) and a secondary check valve (9),
- whereby the piston (30), cylinder body (31), cylinder lid (32), intake (33), outlet (34), primary check valve (8) and secondary check valve (9) are made from a non-metallic material,
**characterised in that**
- the primary valve (8) is a check valve and
- the piston pump (3), filling needle (5) and connection line (4) form a disposable assembly.

2. Filling device as per claim 1, whereby the piston (30), cylinder body (31), cylinder lid (32), intake (33), outlet (34), primary check valve (8) and secondary check valve (9) are made from the same material, in particular PEEK or UHMW polyethylene.

3. Filling device as per one of the preceding claims, whereby the intake (33) and outlet (34) are located within the cylinder lid (32).

4. Filling device as per one of the preceding claims, whereby the primary check valve (8) is located in the intake (33) and the secondary check valve (9) in the outlet (34).

5. Filling device as per one of the preceding claims, whereby a separate guide element (36) is located on an end of the cylinder body (31) facing away from the cylinder lid (32).

6. Filling device as per claim 5, whereby the guide element (36) is fixed within the cylinder body (31) via a clip connection (37).

7. Filling device as per one of the preceding claims, whereby the primary check valve (8) and secondary check valve (9) are screen valves.

8. Filling device as per one of the preceding claims, whereby there is a lip seal around and firmly attached to the piston (30).

9. Filling device as per claim 8, whereby the seal (35) firmly attached to the piston (30) includes a prestressed lip seal.

## Revendications

1. Dispositif de remplissage pour verser une quantité définie d'un produit, comprenant :
- un réservoir (2) pour stocker le produit à verser,
- une aiguille de remplissage (5) pour distribuer le produit à verser,
- une conduite de liaison (4), afin de relier le réservoir (2) à l'aiguille de remplissage (5), et
- une pompe à piston (3), laquelle est disposée dans la conduite de liaison (4), afin de transporter le produit à verser du réservoir (2) à l'aiguille de remplissage (5),
- dans lequel la pompe à piston (3) comprend un piston (30), un corps de cylindre (31), un couvercle de cylindre (32), une arrivée (33), une évacuation (34), une première soupape (8) et un deuxième clapet antiretour (9),
- dans lequel le piston (30), le corps de cylindre (31), le couvercle de cylindre (32), l'arrivée (33), l'évacuation (34), le premier clapet antiretour (8) et le deuxième clapet antiretour (9) sont fabriqués à partir d'un matériau non métallique,
**caractérisé en ce que**
- la première soupape (8) est un clapet antiretour, et
- la pompe à piston (3), l'aiguille de remplissage (5) et la conduite de liaison (4) forment un module, qui est réalisé sous la forme d'un article jetable.

2. Dispositif de remplissage selon la revendication 1, dans lequel le piston (30), le corps de cylindre (31), le couvercle de cylindre (32), l'arrivée (33), l'évacuation (34), le premier clapet antiretour (8) et le deuxième clapet antiretour (9) sont fabriqués à partir du même matériau, en particulier de PEEK ou polyéthylène UHMW.

3. Dispositif de remplissage selon l'une quelconque des revendications précédentes, dans lequel l'arrivée (33) et l'évacuation (34) sont disposées dans le couvercle de cylindre (32).

4. Dispositif de remplissage selon l'une quelconque des revendications précédentes, dans lequel le premier clapet antiretour (8) est disposé dans l'arrivée (33) et le deuxième clapet antiretour (9) dans l'évacuation (34).

5. Dispositif de remplissage selon l'une quelconque des revendications précédentes, dans lequel un élément de guidage (36) séparé est disposé sur le corps de cylindre (31) à une extrémité opposée au couvercle de cylindre (32).

6. Dispositif de remplissage selon la revendication 5, dans lequel l'élément de guidage (36) est fixé dans le corps de cylindre (31) au moyen d'une liaison par clip (37).

7. Dispositif de remplissage selon l'une quelconque des revendications précédentes, dans lequel le premier clapet antiretour (8) et le deuxième clapet antiretour (9) sont réalisés respectivement sous la forme d'un clapet parapluie.

8. Dispositif de remplissage selon l'une quelconque des revendications précédentes, dans lequel une lèvre d'étanchéité périphérique est prévue sur le piston (30), laquelle est formée d'un seul tenant avec le piston (30).

9. Dispositif de remplissage selon la revendication 8, dans lequel le joint (35) formé d'un seul tenant sur le piston (30) présente une lèvre d'étanchéité avec précontrainte.
